# EUROPEAN PATENT SPECIFICATION

(11) **EP 3 237 179 B1**
(45) Date of publication and mention of the grant of the patent: **19.02.2020**
(21) Application number: 15820698.7
(22) Date of filing: 09.12.2015
(51) Int. Cl.: B29C 67/00, C08K 3/00

(54) **METHOD OF ADDITIVE MANUFACTURING USING MOLECULARY SELF-ASSEMBLING MATERIALS AND MICROFILLERS**
VERFAHREN ZUR GENERATIVEN FERTIGUNG UNTER VERWENDUNG VON MOLEKULAR SELBSTANORDNENDEN MATERIALIEN UND MIKROFÜLLSTOFFEN
PROCÉDÉ DE FABRICATION ADDITIVE UTILISANT DES MATÉRIAUX D'AUTO-ASSEMBLAGE MOLÉCULAIRE ET DES MICROCHARGES

(30) Priority: 23.12.2014 US 201462096026 P
(43) Date of publication of application: 01.11.2017
(73) Proprietor: Dow Global Technologies LLC, Midland, MI 48674 (US)
(72) Inventor: MATTEUCCI, Scott T., Midland, MI 48674 (US); PYZIK, Aleksander J., Midland, MI 48674 (US)
(74) Representative: Beck Greener LLP
(86) International application number: PCT/US2015/064688
(87) International publication number: WO 2016/105945

(56) References cited:
- DE-A1-102010 062 875
- US-A1- 2003 004 599
- US-A1- 2010 129 634

## Description

### BACKGROUND

The present disclosure relates to additive manufacturing and in particular to a method of fabricating objects via additive manufacturing using composites comprising molecularly self-assembling (MSA) materials and microfillers.

Additive manufacturing is generally a process in which three-dimensional (3D) objects are fabricated based on computer models of the objects. These processes are used in various fields, such as design-related fields for purposes of visualization, demonstration and mechanical prototyping.

DE 10 2010 062875 A1 discloses a method of fabricating three-dimensional objects, the method comprising the step of providing a composite material comprising a thermoplastic polyurethane, such as polyester-urethane or a polyether-urethane, and a microfiller; (b) depositing the polymer microfiller composite; and (c) repeating the depositing step until the three-dimensional object is formed.

3D printing is one example of additive manufacturing. Methods of 3D printing include fused deposition modeling (FDM) and selective laser sintering (SLS). The materials used in 3D printing have typically been polymers; common examples include acrylonitrile butadiene styrene (ABS), polylactic acid (PLA), polyamides, polyether ether ketone (PEEK) and thermoplastic polyurethane (TPU).

There are many factors to consider when selecting a 3D printing method and building material, for example, the melt flow rate of the polymer and the solid state properties of the fabricated object.

In FDM, molten polymer filament is extruded from an extrusion nozzle to build the fabricated article layer by layer. The important requirements for the polymer when used in SLS are: good melt flow rates, relatively low melting temperature, good adhesion and good mechanical properties after cooling. ABS is currently the standard material for most applications, however, ABS derived articles made via additive manufacturing suffer from poor physical properties, at least in part because these parts are effectively formed from tens to hundreds of weld lines and ABS weld lines are known to have poor physical properties. Also, fabricating with ABS involves formation of fumes, requiring a well-ventilated area.

In SLS, polymer powder, for example polyamide, TPU, or PEEK, is used. The powder is melted during the sintering process, and the viscosity of the melt and the crystallization temperature can cause the fabricated article to become warped. Further, weak bonding, moisture absorption, and low powder recyclability have been cited as drawbacks of SLS using known polymer feed stocks. Adding additives, such as fillers, has been attempted to address these drawbacks, but this has been met with limited success due to the high viscosity of the polymers - high viscosity prevents uniform loading of the additives to the polymer.

An improved additive manufacturing process is desired to produce fabricated articles having good solid state properties. A composite material is desired for use in such additive manufacturing process, such material comprising a polymer and a microfiller.

### SUMMARY

The present invention relates to methods of fabricating a three-dimensional object as defined in claims 1 and 6, the methods comprising (a) providing a polymer microfiller composite comprising a molecularly self-assembling (MSA) material and a microfiller dispersed in the MSA material; (b) depositing the polymer microfiller composite; and (c) repeating the depositing step until the three-dimensional object is formed.

### DESCRIPTION OF THE FIGURES

Figure 1 provides a graph showing the melt viscosity of an Example of the present disclosure;
Figure 2 provides a graph showing the melt viscosity of an Example of the present disclosure;
Figure 3 provides a graph showing the melt viscosity of an Example of the present disclosure; and
Figure 4 provides a graph showing the melt viscosity of an Example of the present disclosure.

### DETAILED DESCRIPTION

The present disclosure relates to additive manufacturing in general, and in particular to a method of using composite materials comprising polymers and microfillers in additive manufacturing processes for producing fabricated articles.

As used herein, the term "desired amount" means a weight sufficient for producing an intended composite.

The term "dispersed" means distributed substantially evenly throughout a medium (e.g., a polymer).

As used herein, the term "polymer" refers to a molecule formed from one or more monomers. Exemplary polymers include, but are not limited to, MSA (molecularly self-assembling) polymers.

The term "metal hydroxide" means a formally charge-neutral particulate consisting of at least one hydroxide moiety (i.e., HO⁻) and one or more cationic elements of any one of Groups 3 to 14 of the periodic table of the chemical elements.

The term "viscosity" means zero shear viscosity unless specified otherwise.

As used herein, "microfiller" refers to a compound which may be combined with the polymer to form a composite having desired properties. Examples of suitable microfillers include, but are not limited to, inorganic clays, organics, metal hydroxide, graphitics, minerals, metals, and ceramics. Preferably, the particle microfiller has an average size (i.e., particle size) in the range of from about 0.1 micrometer (µm) to about 1.0 millimeter (mm). More preferably, the average particle size is from about 2 µm to about 10 µm. Particle size analysis methods and instruments are well known to the skilled person in the art. Preferably, particle size is determined using a Beckman Coulter RAPIDVUE™ instrument (Beckman Coulter Particle Characterization, Miami, Florida, USA). The particle size distribution is not critical and in some embodiments is characterized as being monodispersed, Gaussian, or random.

When the microfiller comprises an inorganic clay (also referred to herein as an "organoclay"), the clay is a natural inorganic clay (consisting essentially of native inorganic cations), more preferably a natural layered silicate (such as a kenyaite), layered 2:1 silicate (such as a natural smectite, hormite, vermiculite, illite, mica, and chlorite), or sepiolite, or the inorganic clay is derived by exchanging at least some of the native inorganic cations of the natural inorganic clay for active inorganic cations. Examples of preferred inorganic clays are layered silicates (such as kenyaite), layered 2:1 silicates (such as natural and synthetic smectites, hormites, vermiculites, illites, micas, and chlorites), and sepiolites. Preferably, the cation exchanging layered material is derived from a natural montmorillonite, mica, fluoromica, sepiolite, nontronite, bentonite, kaolinite, beidellite, volkonskonite, hectorite, fluorohectorite, saponite, sauconite, stevensite, attapulgite, halloysite, medmontite, kenyaite, or vermiculite, or a mixture of two or more thereof. More preferably, the cation exchanging layered material is derived from a natural mica, fluoromica, montmorillonite, or sepiolite. The inorganic clay is not magadiite or a synthetic hydrous magnesium silicate clay (e.g., LAPONITE®, Rockwood Additives Limited, Cheshire, England). In some embodiments, the cation exchanging layered material is derived from a synthetic inorganic clay other than magadiite and a synthetic hydrous magnesium silicate clay. Preferably, the synthetic inorganic clay is a synthetic mica (such as, for example, SOMASIF ME-100, Co-Op Chemicals, Japan) or montmorillonite (e.g., CLOISITE™ Na+, Southern Clay Products, Inc., USA).

When the microfiller comprises an organic, for example wood, preferably the organic is in the form of a fiber or a flour. Preferred wood fiber and flour comprises maple, oak, pine (e.g., Ponderosa Pine and Southern Yellow Pine), or spruce. In some embodiments, the wood is obtained from a commercial supplier such as, for example, American Wood Fibers, Columbia, Maryland, USA. Other organic particles may be substituted for the wood, such as cotton, hemp, and products derived from these materials.

When the microfiller comprises a metal hydroxide, preferably the metal hydroxide comprises barium hydroxide, cobalt hydroxide, copper hydroxide, sodium hydroxide, lithium hydroxide, potassium hydroxide, magnesium hydroxide, or calcium hydroxide, and more preferably magnesium hydroxide or calcium hydroxide.

When the microfiller comprises a graphitic, the graphitic is a compound comprised primarily of carbon, such as carbon black, graphite, graphene, or carbon nanotubes. The graphitic is preferably in powder, platelet or fiber form. Optionally, the graphitic material can be functionalized with heteroatom-containing groups.

When the microfiller comprises minerals, the minerals include, but are not limited to, TiO2, MgO, Mg(OH)2, silica-derived minerals, talc, or other suitable natural or synthetic minerals. The mineral is preferably in powder, platelet or fiber form.

When the microfiller comprises a metal, the metal is any elemental metal or metal alloy, for example, silver, gold, nickel, steel, aluminum, tungsten, copper or titanium. The metal is preferably in powder, platelet or wire form.

When the microfiller comprises ceramic, a ceramic is any oxide, carbide, nitride or boride, for example silicon carbide, boron carbide, silicon nitride, aluminum nitride, silicon boride, titanium diboride, yttrium oxide, zirconium oxide, aluminum oxide, Perovskites (eg. CaTiO3) and glass particles of various compositions. The ceramic is preferably in powder, platelet or fiber form.

Preferably, the microfiller comprises a total of at least 5 wt %, more preferably at least 20 wt%, and still more preferably at least 30 wt% of the polymer microfiller composite of the first embodiment, based on total weight of the polymer microfiller composite. In one instance, where the microfiller is an organoclay, a total of at least 5 wt % of the polymer microfiller composite of the first embodiment, based on total weight of the polymer microfiller composite.. In one instance, where the microfiller is an inorganic other than an organoclay, a total of at least 20 wt % of the polymer microfiller composite of the first embodiment, based on total weight of the polymer microfiller composite. Also preferably, the microfiller comprises a total of about 80 wt% or less, more preferably about 70 wt% or less, and still more preferably about 60 wt% or less of the polymer microfiller composite of the first embodiment based on total weight of the polymer microfiller composite.

As used herein a MSA material means an oligomer or polymer that effectively forms larger associated or assembled oligomers and/or polymers through the physical intermolecular associations of chemical functional groups. Without wishing to be bound by theory, it is believed that the intermolecular associations do not increase the molecular weight (Mₙ-Number Average molecular weight) or chain length of the self-assembling material and covalent bonds between said materials do not form. This combining or assembling occurs spontaneously upon a triggering event such as cooling to form the larger associated or assembled oligomer or polymer structures. Examples of other triggering events are the shear-induced crystallizing of, and contacting a nucleating agent to, a molecularly self-assembling material. Accordingly, in preferred embodiments MSAs exhibit mechanical properties similar to some higher molecular weight synthetic polymers and viscosities like very low molecular weight compounds. MSA organization (self-assembly) is caused by non-covalent bonding interactions, often directional, between molecular functional groups or moieties located on individual molecular (i.e. oligomer or polymer) repeat units (e.g. hydrogen-bonded arrays). Non-covalent bonding interactions include: electrostatic interactions (ion-ion, ion-dipole or dipole-dipole), coordinative metal-ligand bonding, hydrogen bonding, π-π-structure stacking interactions, donor-acceptor, and/or van der Waals forces and can occur intra- and intermolecularly to impart structural order. One preferred mode of self-assembly is hydrogen-bonding and this non-covalent bonding interactions is defined by a mathematical "Association constant", K (assoc) constant describing the relative energetic interaction strength of a chemical complex or group of complexes having multiple hydrogen bonds. Such complexes give rise to the higher-ordered structures in a mass of MSA materials. A "hydrogen bonding array" is a purposely synthesized set (or group) of chemical moieties (e.g. carbonyl, amine, amide, hydroxyl. etc.) covalently bonded on repeating structures or units to prepare a self assembling molecule so that the individual chemical moieties preferably form self assembling donor-acceptor pairs with other donors and acceptors on the same, or different, molecule. A "hydrogen bonded complex" is a chemical complex formed between hydrogen bonding arrays. Hydrogen bonded arrays can have association constants K (assoc) between 10² and 10⁹ M⁻¹ (reciprocal molarities), generally greater than 10³ M⁻¹. In preferred embodiments, the arrays are chemically the same or different and form complexes.

Accordingly, the molecularly self-assembling materials (MSA) presently include: molecularly self-assembling polyesteramides, copolyesteramide, copolyetheramide, copolyetherester-amide, copolyetherester-urethane, copolyether-urethane, copolyester-urethane, copolyester-urea, copolyetherester-urea and their mixtures. Preferred MSA include copolyesteramide, copolyether-amide, copolyester-urethane, and copolyether-urethanes. The MSA preferably has number average molecular weights, MW**ₙ** (interchangeably referred to as Mₙ) (as is preferably determined by NMR spectroscopy) of 2000 grams per mole or more, more preferably at least about 3000 g/mol, and even more preferably at least about 5000 g/mol. The MSA preferably has MW**ₙ** 50,000 g/mol or less, more preferably about 20,000 g/mol or less, yet more preferably about 15,000 g/mol or less, and even more preferably about 12,000 g/mol or less. The MSA material preferably comprises molecularly self-assembling repeat units, more preferably comprising (multiple) hydrogen bonding arrays, wherein the arrays have an association constant K (assoc) preferably from 10² to 10⁹ reciprocal molarity (M⁻¹) and still more preferably greater than 10³ M⁻¹; association of multiple-hydrogen-bonding arrays comprising donor-acceptor hydrogen bonding moieties is the preferred mode of self assembly. The multiple H-bonding arrays preferably comprise an average of 2 to 8, more preferably 4-6, and still more preferably at least 4 donor-acceptor hydrogen bonding moieties per molecularly self-assembling unit. Molecularly self-assembling units in preferred MSA materials include bisamide groups, and bis-urethane group repeat units and their higher oligomers.

Preferred self-assembling units in the MSA material useful in the present invention are bis-amides, bis-urethanes and bis-urea units or their higher oligomers. A more preferred self-assembling unit comprises a poly(ester-amide), poly(ether-amide), poly(ester-urea), poly(ether-urea), poly(ester-urethane), or poly(ether-urethane), or a mixture thereof. For convenience and unless stated otherwise, oligomers or polymers comprising the MSA materials may simply be referred to herein as polymers, which includes homopolymers and interpolymers such as co-polymers, terpolymers, etc.

In some embodiments, the MSA materials include "non-aromatic hydrocarbylene groups" and this term means specifically herein hydrocarbylene groups (a divalent radical formed by removing two hydrogen atoms from a hydrocarbon) not having or including any aromatic structures such as aromatic rings (e.g. phenyl) in the backbone of the oligomer or polymer repeating units. In some embodiments, non-aromatic hydrocarbylene groups are optionally substituted with various substituents, or functional groups, including but not limited to: halides, alkoxy groups, hydroxy groups, thiol groups, ester groups, ketone groups, carboxylic acid groups, amines, and amides. A "non-aromatic heterohydrocarbylene" is a hydrocarbylene that includes at least one non-carbon atom (e.g. N, O, S, P or other heteroatom) in the backbone of the polymer or oligomer chain, and that does not have or include aromatic structures (e.g., aromatic rings) in the backbone of the polymer or oligomer chain. In some embodiments, non-aromatic heterohydrocarbylene groups are optionally substituted with various substituents, or functional groups, including but not limited to: halides, alkoxy groups, hydroxy groups, thiol groups, ester groups, ketone groups, carboxylic acid groups, amines, and amides. Heteroalkylene is an alkylene group having at least one non-carbon atom (e.g. N, O, S or other heteroatom) that, in some embodiments, is optionally substituted with various substituents, or functional groups, including but not limited to: halides, alkoxy groups, hydroxy groups, thiol groups, ester groups, ketone groups, carboxylic acid groups, amines, and amides. For the purpose of this disclosure, a "cycloalkyl" group is a saturated carbocyclic radical having three to twelve carbon atoms, preferably three to seven. A "cycloalkylene" group is an unsaturated carbocyclic radical having three to twelve carbon atoms, preferably three to seven. Cycloalkyl and cycloalkylene groups independently are monocyclic or polycyclic fused systems as long as no aromatics are included. Examples of carbocyclic radicals include cyclopropyl, cyclobutyl, cyclopentyl, cyclohexyl and cycloheptyl. In some embodiments, the groups herein are optionally substituted in one or more substitutable positions as would be known in the art. For example in some embodiments, cycloalkyl and cycloalkylene groups are optionally substituted with, among others, halides, alkoxy groups, hydroxy groups, thiol groups, ester groups, ketone groups, carboxylic acid groups, amines, and amides. In some embodiments, cycloalkyl and cycloalkene groups are optionally incorporated into combinations with other groups to form additional substituent groups, for example: "-Alkylene-cycloalkylene-, "-alkylene-cycloalkylene-alkylene-", "-heteroalkylene-cycloalkylene-", and "-heteroalkylene-cycloalkyl-heteroalkylene" which refer to various non-limiting combinations of alkyl, heteroalkyl, and cycloalkyl. These combinations include groups such as oxydialkylenes (e.g., diethylene glycol), groups derived from branched diols such as neopentyl glycol or derived from cyclo- hydrocarbylene diols such as Dow Chemical's UNOXOL® isomer mixture of 1,3- and 1,4-cyclohexanedimethanol, and other non-limiting groups, such -methylcylohexyl-, -methyl-cyclohexyl-methyl-, and the like. "Heterocycloalkyl" is one or more cyclic ring systems having 4 to 12 atoms and, containing carbon atoms and at least one and up to four heteroatoms selected from nitrogen, oxygen, or sulfur. Heterocycloalkyl includes fused ring structures. Preferred heterocyclic groups contain two ring nitrogen atoms, such as piperazinyl. In some embodiments, the heterocycloalkyl groups herein are optionally substituted in one or more substitutable positions. For example in some embodiments, heterocycloalkyl groups are optionally substituted with halides, alkoxy groups, hydroxy groups, thiol groups, ester groups, ketone groups, carboxylic acid groups, amines, and amides.

Examples of MSA materials useful in the present invention are poly(ester-amides), poly(ether-amides), poly(ester-ureas), poly(ether-ureas), poly(ester-urethanes), and poly(ether-urethanes), and mixtures thereof. Preferred said MSA materials are described below.

According to a first embodiment of the invention, the molecularly self-assembling material comprises ester repeat units of Formula I: 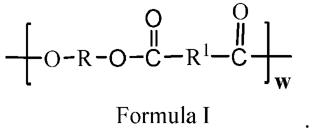 and at least one second repeat unit selected from the esteramide units of Formula II and III: 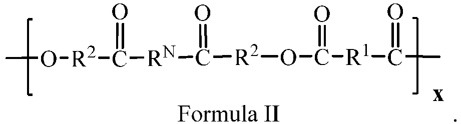 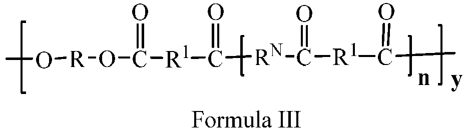 and the ester-urethane units of Formula IV: 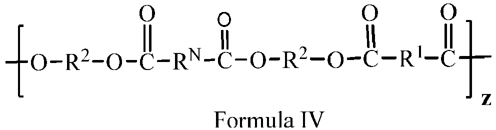 wherein
R is at each occurrence, independently a C₂-C₂₀ non-aromatic hydrocarbylene group, a C₂-C₂₀ non-aromatic heterohydrocarbylene group, or a polyalkylene oxide group having a group molecular weight of from about 100 to about 5000 g/mol. In preferred embodiments, the C₂-C₂₀ non-aromatic hydrocarbylene at each occurrence is independently specific groups: alkylene-, -cycloalkylene-, -alkylene-cycloalkylene-, -alkylene-cycloalkylene-alkylene-(including dimethylene cyclohexyl groups). Preferably, these aforementioned specific groups are from 2 to 12 carbon atoms, more preferably from 3 to 7 carbon atoms. The C₂-C₂₀ non-aromatic heterohydrocarbylene groups are at each occurrence, independently specifically groups, non-limiting examples including: -hetereoalkylene-, - heteroalkylene-cycloalkylene-, -cycloalkylene-heteroalkylene-, or -heteroalkylene-cycloalkylene-heteroalkylene-, each aforementioned specific group preferably comprising from 2 to 12 carbon atoms, more preferably from 3 to 7 carbon atoms. Preferred heteroalkylene groups include oxydialkylenes, for example diethylene glycol (-CH₂CH₂OCH₂CH₂-O-). When R is a polyalkylene oxide group it preferably is a polytetramethylene ether, polypropylene oxide, polyethylene oxide, or their combinations in random or block configuration wherein the molecular weight (Mn-average molecular weight, or conventional molecular weight) is preferably about 250 g/ml to 5000, g/mol, more preferably more than 280 g/mol, and still more preferably more than 500 g/mol, and is preferably less than 3000 g/mol; in some embodiments, mixed length alkylene oxides are included. Other preferred embodiments include species where R is the same C₂-C₆ alkylene group at each occurrence, and most preferably it is -(CH₂)₄-.
R¹ is at each occurrence, independently, a bond, or a C₁-C₂₀ non-aromatic hydrocarbylene group. In some preferred embodiments, R¹ is the same C₁-C₆ alkylene group at each occurrence, most preferably -(CH₂)₄-.
R² is at each occurrence, independently, a C₁-C₂₀ non-aromatic hydrocarbylene group. According to another embodiment, R² is the same at each occurrence, preferably C₁-C₆ alkylene, and even more preferably R² is -(CH₂)₂-, -(CH₂)₃-, -(CH₂)₄-, or -(CH₂)₅-.
R^{N} is at each occurrence -N(R³)-Ra-N(R³)-, where R³ is independently H or a C₁-C₆ alkyl, preferably C₁-C₄ alkyl, or R^{N} is a C₂-C₂₀ heterocycloalkylene group containing the two nitrogen atoms, wherein each nitrogen atom is bonded to a carbonyl group according to Formula II or III above; w represents the ester mol fraction, and x, y and z represent the amide or urethane mole fractions where w+x+y+z=1, 0 < w < 1 , and at least one of x, y and z is greater than zero. Ra is a C₂-C₂₀ non-aromatic hydrocarbylene group, more preferably a C₂-C₁₂ alkylene: most preferred Ra groups are ethylene butylene, and hexylene -(CH₂)₆-. In some embodiments, R^{N} is piperazin-1,4-diyl. According to another embodiment, both R³ groups are hydrogen.
n is at least 1 and has a mean value less than 2.

According to a second embodiment of the invention, the MSA is a polymer consisting of repeat units of either Formula II or Formula III, wherein R, R¹, R², R^{N}, and n are as defined above and x and y are mole fractions wherein x+y = 1, and 0≤x≤1 and 0≤y≤1.

In certain embodiments comprising polyesteramides of Formula I and II, or Formula I, II, and III, particularly preferred materials are those wherein R is -(C₂-C₆)- alkylene, especially -(CH₂)₄-. Also preferred are materials wherein R¹ at each occurrence is the same and is C₁-C₆ alkylene, especially -(CH₂)₄-. Further preferred are materials wherein R² at each occurrence is the same and is -(C₁-C₆)- alkylene, especially -(CH₂)₅- alkylene. The polyesteramide according to this embodiment preferably has a number average molecular weight (Mn) of at least about 4000, and no more than about 20,000. More preferably, the molecular weight is no more than about 12,000.

For convenience the chemical repeat units for various embodiments are shown independently. The invention encompasses all possible distributions of the **w, x, y,** and **z** units in the copolymers, including randomly distributed **w, x, y** and **z** units, altenatingly distributed **w, x, y** and **z** units, as well as partially, and block or segmented copolymers, the definition of these kinds of copolymers being used in the conventional manner as known in the art. Additionally, there are no particular limitations in the invention on the fraction of the various units, provided that the copolymer contains at least one **w** and at least one **x, y,** or **z** unit. In some embodiments, the mole fraction of **w** to **(x +y+ z)** units is between about 0.1:0.9 and about 0.9:0.1. In some preferred embodiments, the copolymer comprises at least 15 mole percent **w** units, at least 25 mole percent **w** units, or at least 50 mole percent **w** units

In some embodiments, the number average molecular weight (Mₙ) of the MSA material useful in the present invention is between 1000 g/mol and 30,000 g/mol, inclusive. In some embodiments, Mₙ of the MSA material is between 2,000 g/mol and 20,000 g/mol, inclusive, preferably 5,000 g/mol to 12,000 g/mol. In more preferred embodiments, Mₙ of the MSA material is less than 5,000 g/mol. Thus, in some more preferred embodiments, Mₙ of the MSA material is at least about 1000 g/mol and 4,900 g/mol or less, more preferably 4,500 g/mol or less.

Viscosity of a melt of a preferred MSA material is characterized as being Newtonian over the frequency range of 10⁻¹ to 10² radians per second (rad./s.) at a temperature from above a melting temperature (referred to herein as "Tₘ") up to about 40 degrees Celsius (°C) above Tₘ, preferably as determined by differential scanning calorimetry (DSC). Depending upon the polymer or oligomer, preferred MSA materials exhibit Newtonian viscosity in the test range frequency at temperatures above 100 °C, more preferably above 120 °C and more preferably still at or above 140 °C and preferably less than 300 °C, more preferably less than 250 °C and more preferably still less than 200 °C. For the purposes of the present disclosure, the term Newtonian has its conventional meaning; that is, approximately a constant viscosity with increasing (or decreasing) shear rate of a (MSA) material at a constant testing temperature. The zero shear viscosity of a preferred MSA material is in the range of from 0.1 Pa·s. to 1000 Pa·s., preferably from 0.1 Pa·s. to 100 Pa·s., more preferably from 0.1 to 30 Pa·s., still more preferred 0.1 Pa·s. to 10 Pa·s., between the temperature range of 180 °C and 220 °C, e.g., 180 °C and 190 °C.

Preferably, the viscosity of a melt of a MSA material useful in the present invention is less than 100 Pa·s. at from above Tₘ up to about 40 °C above Tₘ. The viscosity of one of the preferred MSA materials is less than 100 Pa·s. at 190 °C, and more preferably in the range of from 1 Pa·s. to 50 Pa·s. at 150 °C to 180 °C. Preferably, the glass transition temperature of the MSA material is less than 20 °C. Preferably, the melting temperature is higher than 60 °C. Preferred MSA materials exhibit multiple glass transition temperatures T_{g}. Preferably, the MSA material has a T_{g} that is higher than -80 °C. Also preferably, the MSA material has a T_{g} that is higher than -60 °C.

Tensile modulus of one preferred group of MSA materials is preferably from 4 megapascals (MPa) to 500 MPa at room temperature, preferably 20 °C. Tensile modulus testing is well known in the polymer arts.

Preferably, torsional (dynamic) storage modulus of MSA materials useful in the invention is at least 100 MPa at 20 °C. More preferably, the storage modulus is at least 200 MPa, still more preferably at least 300 MPa, and even more preferably greater than 400 MPa, all at 20 °C.

Preferably, polydispersities of substantially linear MSA materials useful in the present invention is 4 or less, more preferably 3 or less, still more preferably 2.5 or less, still more preferably 2.2 or less.

In some embodiments, the polymers described herein are modified with, for example and without limitation thereto, microfillers.

A preferred polymer microfiller composite of the first embodiment is characterized, when its MSA material is a melt, as having a zero shear viscosity of less than 10,000,000 Pa·s., more preferably 1,000,000 Pa·s. or less and above 1000 Pa·s, preferably above 10,000 Pa·s at from above Tₘ up to about 40 °C above Tₘ of the MSA material, preferably from 150 °C to 180 °C.

Preferably, temperature of the melt comprising the MSA material during the dispersing of microfiller therein is less than 250 °C, more preferably less than 200 °C, and still more preferably less than 180 °C. In some embodiments where the microfiller is the cellulosic material, the temperature of the melt preferably is less than 180 °C, a scorch temperature of wood.

In some embodiments, the microfiller is dispersed in the melt comprising the MSA material at a rate of mixing of at least about 20 revolutions per minute (rpm), preferably at least about 30 rpm, more preferably at least about 50 rpm, still more preferably at least about 100 rpm, and even more preferably at least about 200 rpm.

### Examples

As used in these Examples, CLOISITE™ 30B (Southern Clay Products, Inc.) is a natural montmorillonite-derived organoclay having CAS No. 341537-63-1 and having a CEC of 90 mEQ per 100 grams and an organic cation comprising methyl,tallow,bis-(2-hydroxyethyl) quaternary ammonium.

As used in these Examples, SOMASIF MEE-100 (Co-op Chemicals, Japan) is a synthetic fluoromica-derived organoclay having a CEC 115 mEQ per 100 grams and 28.5 wt% of an organic cation comprising methyl,bis-(2-hydroxyethyl) cocamidopropyl betaine (coco betaine) quaternary ammonium.

As used in these Examples, proton nuclear magnetic resonance spectroscopy (proton NMR or ¹H-NMR) is used to determine monomer purity, copolymer composition, and copolymer number average molecular weight Mₙ utilizing the CH₂OH end groups. Proton NMR assignments are dependent on the specific structure being analyzed as well as the solvent, concentration, and temperatures utilized for measurement. For ester amide monomers and co-polyesteramides, d4-acetic acid is the solvent used unless otherwise noted. For ester amide monomers of the type called DD that are methyl esters typical peak assignments are about 3.6 to 3.7 ppm for C(=O)-OCH₃; about 3.2 to 3.3 ppm for N-CH₂-; about2.2 to 2.4 ppm for C(=O)-CH₂-; and about 1.2 to 1.7 ppm for C-CH₂-C. For co-polyesteramides that are based on DD with 1,4-butanediol, typical peak assignments are about 4.1 to 4.2 ppm for C(=O)-OCH₂-; about3.2 to 3.4 ppm for N-CH₂-; about 2.2 to 2.5 ppm for C(=O)-CH₂-; about 1.2 to 1.8 ppm for C-CH₂-C, and about 3.6 to 3.75 -CH₂OH end groups.

### Example 1

An MSA material is prepared that is a polyesteramide (PEA) having 50 mole percent of ethylene-N,N'-dihydroxyhexanamide (C2C) monomer (the MSA material is generally designated as PEA-C2C50%). Three preparations of the MSA material are prepared in this Example, identified as Preparation 1A, Preparation 1B, and Preparation 1C.

### Step (a) Preparation of the ethylene-N,N'-dihydroxyhexanamide (C2C) monomer

The ethylene-N,N'-dihydroxyhexanamide (C2C) monomer (also referred to herein as C2C diamine diol monomer) is prepared by reacting 1.2 kg ethylene diamine (EDA) with 4.56 kilograms (kg) of ε-caprolactone under a nitrogen blanket in a stainless steel reactor equipped with an agitator and a cooling water jacket. An exothermic condensation reaction between the ε-caprolactone and the EDA occurs which causes the temperature to rise gradually to 80 degrees Celsius (°C). A white deposit forms and the reactor contents solidify, at which time the stirring is stopped. The reactor contents are then cooled to 20 °C and are then allowed to rest for 15 hours. The reactor contents are then heated to 140 °C at which temperature the solidified reactor contents melt. The liquid product is then discharged from the reactor into a collecting tray. A nuclear magnetic resonance study of the resulting product shows that the molar concentration of C2C diamide diol in the product exceeds 80 per cent. The melting temperature of the C2C diamide diol monomer product is 140 °C.

### Step (b): Contacting C2C diamide diol monomer with dimethyl adipate (DMA)

A 100 liter single shaft Kneader-Devolatizer reactor equipped with a distillation column and a vacuum pump system is nitrogen purged, and heated under nitrogen atmosphere to 80 °C (based on thermostat). Dimethyl adipate (DMA; 38.324 kg) and C2C diamide diol monomer (31.724 kg) are fed into the kneader to provide a slurry. The slurry is stirred at 50 revolutions per minute (rpm).

### Step (c): Contacting C2C/DMA with 1,4-butanediol, distilling methanol and transesterification

1,4-Butanediol (18.436 kg) is added to the slurry of Step (b) at a temperature of about 60 °C. The reactor temperature is further increased to 145 °C to obtain a homogeneous solution. Still under nitrogen atmosphere, a solution of titanium(IV)butoxide (153 g) in 1.380 kg 1,4-butanediol is injected at a temperature of 145 °C into the reactor, and methanol evolution starts. The temperature in the reactor is slowly increased to 180 °C over 1.75 hours, and is held for 45 additional minutes to complete distillation of methanol at ambient pressure. 12.664 kilograms of methanol are collected.

### Step (d): distilling 1,4-butanediol and polycondensation to give PEA-C2C50%

The reactor dome temperature is increased to 130 °C and the vacuum system is activated stepwise to a reactor pressure of 7 mbar (0.7 kiloPascals (kPa)) in 1 hour. The temperature in the kneader/devolatizer reactor is kept at 180 °C. The vacuum is then increased to 0.7 mbar (0.07 kPa) for 7 hours and the temperature is increased to 190 °C. The reactor is held for 3 additional hours at 191 °C and with vacuum ranging from 0.87 to 0.75 mbar. At this point a sample of the reactor contents is taken (Preparation 1A); melt viscosities were 6575 megaPascals (mPas) at 180 °C and 5300 mPas at 190 °C. The reaction is continued for another 1.5 hours until the final melt viscosities are recorded as 8400 mPas at 180 °C and 6575 mPas at 190 °C (Preparation 1B). Then the liquid Kneader/Devolatizer reactor contents are discharged at high temperature of about 190 °C into collecting trays and the polymer is cooled to room temperature and grinded. Final product is 57.95 kg (87.8% yield) of melt viscosities 8625 mPas at 180 °C and 6725 mPas at 190 °C (Preparation 1C). Preparations 1A to 1C have the data shown below in Table I (vacuum is less than 1.2 mbar, viscosities measured using Brookfield DV-II+ Viscometer).

**Table I**

| Hours in full vacuum * | Preparation Number | Spindle No. 28** (rpm) | Viscosity at 180°C (mPas) | Viscosity at 190°C (mPas) | Mₙ by 1H-NMR (g/mol) |
|---|---|---|---|---|---|
| 10 | 1A | 20 | 6575 | 5300 | 6450 |
| 11.5 | 1B | 20 | 8400 | 6575 | 6900 |
| 11.5 | 1C | 20 | 8625 | 6725 | 7200 |

### Example 2

An MSA material is prepared that is a polyesteramide (PEA) having 18 mole percent of ethylene-N,N'-dihydroxyhexanamide (C2C) monomer (the MSA material is generally designated as PEA-C2C18%).

Into a 1-neck 500 mL round bottom flask is loaded titanium (IV) butoxide (0.31 g, 0.91 mmol), N,N'-1,2-ethanediyl-bis[6-hydroxyhexanamide] (C2C, 30.80 g, 0.1068 mol), dimethyl adipate (103.37 g, 0.5934 mol), and 1,4-butanediol (97.33 g, 1.080 mol). A stir-shaft and blade are inserted into the flask along with a modified Claisen adaptor with Vigreux column and distillation head. The apparatus is completed with stir bearing, stir motor, thermometer, take-off adaptor, receiver, heat-tracing and insulation, vacuum pump, vacuum regulator, nitrogen feed, and temperature controlled bath. The apparatus is degassed and held under positive nitrogen. The flask is immersed into a 160°C bath with temperature raised to 175°C for a total of 2 hours. The receiver is changed and vacuum is applied according to the following schedule: 5 minutes, 450 Torr (60 kiloPascals (kPa)); 5 minutes, 100 Torr; 5 minutes, 50 Torr; 5 minutes, 40 Torr; 10 minutes, 30 Torr; 10 minutes, 20 Torr; 1.5 hours, 10 Torr. The apparatus is placed under nitrogen, receiver changed, and placed under vacuum ranging over about 0.36 to about 0.46 Torr with the following schedule: 2 hours, 175°C; 2 hours, to/at 190°C, and 3 hours to/at 210°C. The inherent viscosity is measured with a Brookfield DV-II+ Viscometer as = 0.32 dL/g (methanol: chloroform (1:1 w/w), 30.0°C, 0.5 g/dL). By proton NMR in d4-acetic acid, Mn from end groups is 11,700 g/mol and 17.3 mole % of polymer repeat units contain C2C.

### Compounding procedure for preparing polymer organoclay composites

Prior to compounding, all MSA materials and organoclays are pre-weighed and stored separately (the MSA materials and organoclays are not dried before blending, the compositions of these materials is identified in Table 5). A Haake PolyLab Rheocord blender (Haake) is outfitted with a 20 milliliter (mL) bowl. Temperatures of all zones of the Haake mixer are set to 160 °C. An air cooling hose is attached to the central one of the zones in order to maintain temperature control. The MSA material is loaded into the 20 mL bowl and allowed to melt. Organoclays are added directly to the MSA material melt. Then, a plunger is lowered into the Haake, and the melt of the MSA material and organoclay is compounded at a rotor speed of 200 revolutions per minute (rpm), and a residence time of approximately 2.5 minutes. The residence time begins with the lowering of the plunger, and ends with the raising a stopper. Table 2 presents the timing for the compounding.

**Table 2. Summary of composite compounding procedure**

| Time | rpm | Comment |
|---|---|---|
| 0 second | 200 | |
| 10 seconds | 50 | Add MSA material |
| 1 minute 10 seconds | 200 | Allow MSA material to melt |
| 1 minute 30 seconds | 200 | Add organoclay or other fillers |
| 2 minutes 30 seconds | 200 | Compound to give composite |
| 5 minutes | 0 | Recover composite |

### Compression molding procedure:

Prior to molding, all samples are allowed to dry overnight (at least 16 hours) at 65 °C in a vacuum of approximately 36 cmHg (48 kiloPascals (kPa)). Samples are compression molded into 10 cm x 10 cm x 0.05 cm plaques and 5 cm x 1.25 cm x 0.32 cm bars using a MPT-14 compression/lamination press (Tetrahedron Associates, Inc., San Diego, California, USA). The molding parameters for composites comprising the MSA materials of Preparations 1 and 2 are listed in Tables 3 and 4, respectively.

**Table 3. Summary of compression molding parameters for composites comprising the MSA material of Preparation 1C**

| Step | Temperature (°C) | Temperature ramp rate (°C/minute) | Load, kg (klb) | Load ramp rate, kg/minute (klb/min) | Time (minutes) |
|---|---|---|---|---|---|
| 1 | 140 | 93 | 608 (1.5) | 317x10³ (1200) | 5 |
| 2 | 140 | 93 | 4536 (10) | 317x10³ (1200) | 4 |
| 3 | 140 | 93 | 18143 (40) | 317x10³ (1200) | 3 |
| 4 | 37.8 | 93 | 450 (1) | 317x10³ (1200) | 5 |
| 5 | End | | | | |

**Table 4. Summary of compression molding parameters for composites comprising the MSA material of Preparation 2**

| Step | Temperature (°C) | Temperature ramp rate (°C/minute) | Load, kg (klb) | Load ramp rate, kg/minute (klb/min) | Time (minutes) |
|---|---|---|---|---|---|
| 1 | 93 | 93 | 2268 (5) | 317x10³ (1200) | 5 |
| 2 | 93 | 93 | 4536 (10) | 317x10³ (1200) | 10 |
| 3 | 93 | 93 | 2268 (5) | 317x10³ (1200) | 5 |
| 4 | 24 | 93 | 450 (1) | 317x10³ (1200) | 5 |
| 5 | End | | | | |

### Melt viscosity measurement procedure

Samples are die cut from a plaque of composite. Parallel plate geometry holders in an Ares Rheometer (TA Instruments) are heated to 170 °C. The holders are zeroed at temperature. A sample is loaded onto the holders, and the top holder is lowered into that sample so that there is significant normal force on the sample. The sample is allowed to melt, and any melted sample that extends beyond the holders is removed. Initially, a dynamic strain sweep is conducted at 1 Hz and 170 °C beginning at a strain of 0.1%. For each sample, a strain value is obtained from a region where loss modulus (G") is linear over a range of strain values. This strain value is used for subsequent dynamic frequency sweeps. Using the strain value obtained during the strain sweep, a frequency sweep is conducted at 170 °C. The frequency ranged from 100 rad/s. to 0.1 rad/s.

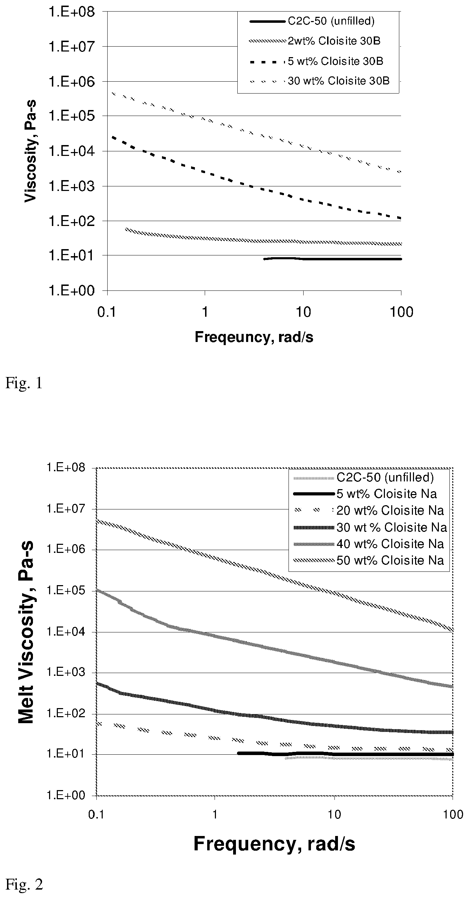

Separate weighed samples of the PEA-C2C50% of Preparation 1C are compounded with weighed amounts of CLOISITE™ 30B according to the compounding procedure for preparing polymer organoclay composites described above to give invention polymer organoclay composites respectively having 2 wt%, 5 wt%, 10 wt%, 20 wt%, 30 wt%, 40 wt%, or 50 wt% of the CLOISITE™ 30B as shown in Table 5. Melt viscosity results are shown as part of Fig. 1.

**Table 5. PEA-C2C50%/CLOISITE™ 30B composites of Samples 1 to 7:**

| Sample Number: | 1 | 2 | 3 | 4 | 5 | 6 | 7 |
|---|---|---|---|---|---|---|---|
| Amount of CLOISITE™ 30B (wt%) | 2 | 5 | 10 | 20 | 30 | 40 | 50 |

Preparations described in these Examples are used to fabricate articles using a 3D printer. It is observed that the polymer organoclay composite referenced in Table 5 having 2 wt% CLOISITE™ 30B has too low of a viscosity to be used in additive printing. It is observed that the polymer organoclay composites referenced in Table 5 having 40 wt% and 50 wt% CLOISITE™ 30B have too high of a viscosity to be used in additive printing.

### Example 3

Six weighed samples of the PEA-C2C50% of Preparation 1 are compounded with weighed amounts of CLOISITE™ Na⁺ according to the compounding procedure for preparing polymer inorganic clay composites described above to give polymer inorganic clay composites respectively having 5 wt%, 10 wt%, 20 wt%, 30 wt%, 40 wt%, or 50 wt% of the CLOISITE™ Na⁺ as shown in Table 6. Melt viscosity results are shown in Fig. 2.

**Table 6. CLOISITE™ composition of Samples 1 to 6**

| Sample Number: | 1 | 2 | 3 | 4 | 5 | 6 |
|---|---|---|---|---|---|---|
| Amount of CLOISITE™ Na (wt%) | 5 | 10 | 20 | 30 | 40 | 50 |

It is observed that Samples 1, 2 and 3 did not have sufficient viscosity to be used in additive printing.

### Example 4

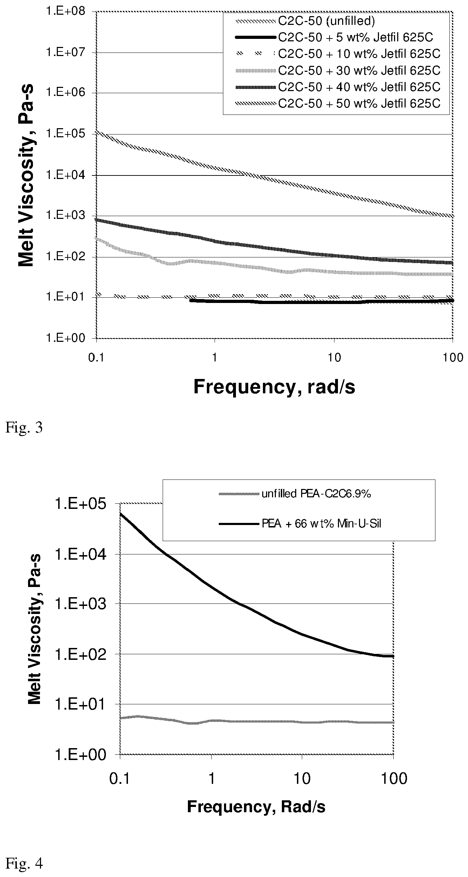

Following Compounding Procedure 1, Haake blending of six weighed samples of the PEA-C2C50% of Preparation 1 and weighed amounts of the Jetfil 625C talc are separately carried out as described previously to give talc composites having 5 wt%, 10 wt%, 20 wt%, 30 wt%, 40 wt%, or 50 wt% of the Jetfil 625C talc as shown in Table 7. Melt viscosity results are shown in Fig. 3.

**Table 7. talc composites of Samples 7 to 12**

| Sample Number: | 7 | 8 | 9 | 10 | 11 | 12 |
|---|---|---|---|---|---|---|
| Amount of Jetfil 625C talc (wt%) | 5 | 10 | 20 | 30 | 40 | 50 |

### Example 5

Haake blending of 34 wt% PEA-C2C6.9% of Preparation 4 and 66 wt% of the Min-U-Sil™ 5 silica is carried out as described previously to give a silica composite having 66 wt% of the Min-U-Sil™ 5 silica. Melt viscosity results are shown as part of Fig. 4.

## Claims

1. A method of fabricating a three-dimensional object, the method comprising:
(c) providing a polymer microfiller composite comprising a molecularly self-assembling (MSA) material and a microfiller dispersed in the MSA material;
(d) depositing the polymer microfiller composite;
(e) repeating the depositing step until the three-dimensional object is formed;
wherein the molecularly self-assembling material comprises repeat units of formula I: 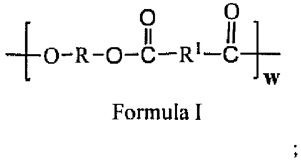 and at least one second repeat unit selected from the ester-amide units of Formula II and III: 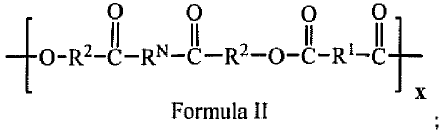 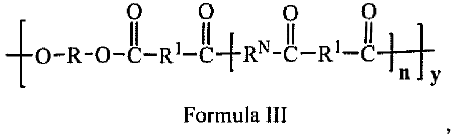 and the ester-urethane units of Formula IV: 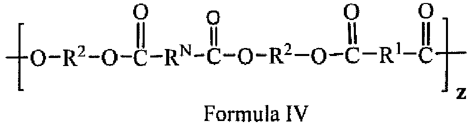 or combinations thereof wherein:
R is at each occurrence, independently a C₂-C₂₀ non-aromatic hydrocarbylene group, a C₂-C₂₀ non-aromatic heterohydrocarbylene group, or a polyalkylene oxide group having a group molecular weight of from about 100 grams per mole to about 5000 grams per mole;
R¹ at each occurrence independently is a bond or a C₁-C₂₀ non-aromatic hydrocarbylene group;
R² at each occurrence independently is a C₁-C₂₀ non-aromatic hydrocarbylene group;
R^{N} is -N(R³)-Ra-N(R³)-, where R³ at each occurrence independently is H or a C₁-C₆ alkylene and Ra is a C₂-C₂₀ non-aromatic hydrocarbylene group, or R^{N} is a C₂-C₂₀ heterocycloalkyl group containing the two nitrogen atoms, wherein each nitrogen atom is bonded to a carbonyl group according to formula (III) above;
n is at least 1 and has a mean value less than 2; and
w represents the ester mol fraction of Formula I, and x, y and z represent the amide or urethane mole fractions of Formulas II, III, and IV, respectively, where w+x+y+z=1, and 0 < w < 1 , and at least one of x, y and z is greater than zero but less than 1.

2. The method of fabricating a three-dimensional object as in claim 1, wherein the MSA material comprises self-assembling units comprising multiple hydrogen bonding arrays.

3. The method of fabricating a three-dimensional object as in claim 2, wherein the multiple hydrogen bonding arrays have an association constant K(assoc) of greater than 1000 reciprocal molarity.

4. The method of fabricating a three-dimensional object as in claim 2 or 3, wherein the multiple H-bonding arrays comprise at least 4 donor-acceptor hydrogen bonding sites per self-assembling unit.

5. The method of fabricating a three-dimensional object as in any one of claims 2 to 4, wherein the multiple H-bonding arrays comprise an average of 2 to 8 donor-acceptor hydrogen bonding sites per self-assembling unit.

6. A method of fabricating a three-dimensional object, the method comprising:
(a) providing a polymer microfiller composite comprising a molecularly self-assembling (MSA) material and a microfiller dispersed in the MSA material;
(b) depositing the polymer microfiller composite;
(c) repeating the depositing step until the three-dimensional object is formed;
wherein the MSA material is of Formula II or III: 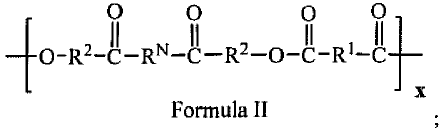 or 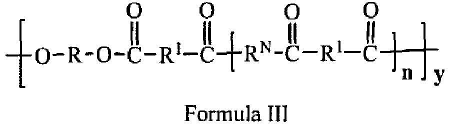 wherein:
R is at each occurrence, independently a C₂-C₂₀ non-aromatic hydrocarbylene group, a C₁-C₂₀ non-aromatic heterohydrocarbylene group, or a polyalkylene oxide group having a group molecular weight of from about 100 grams per mole to about 5000 grams per mole;
R¹ at each occurrence independently is a bond or a C₁-C₂₀ non-aromatic hydrocarbylene group;
R² at each occurrence independently is a C₁-C₂₀ non-aromatic hydrocarbylene group;
R^{N} is -N(R³)-Ra-N(R³)-, where R³ at each occurrence independently is H or a C₁-C₆ alkylene and Ra is a C₂-C₂₀ non-aromatic hydrocarbylene group, or R^{N} is a C₂-C₂₀ heterocycloalkyl group containing the two nitrogen atoms, wherein each nitrogen atom is bonded to a carbonyl group according to formula (III) above;
n is at least 1 and has a mean value less than 2; and
x and y represent mole fraction wherein x+y = 1, and 0≤x≤1, and 0≤y≤1.

7. The method of fabricating a three-dimensional object as in any one of claims 1-6, wherein the number average molecular weight (Mn) of the molecularly self-assembling material is between about 1000 grams per mole and about 50,000 grams per mole, wherein the Mn is determined by NMR according to the method disclosed in the specification.

8. The method of fabricating a three-dimensional object as in any one of claims 1-7, wherein the microfiller comprises organic clays, inorganic clays, organics, metal hydroxide, graphitics, minerals, metals, ceramics or a mixture thereof.

9. The method of fabricating a three-dimensional object as in any one of claims 1-8, wherein the polymer microfiller composite comprises 20 wt % or more of the microfiller.

## Patentansprüche

1. Ein Verfahren des Herstellens eines dreidimensionalen Objekts, wobei das Verfahren Folgendes beinhaltet:
(c) Bereitstellen eines Polymer-Mikrofüllstoff-Verbundwerkstoffes, beinhaltend ein molekular selbstanordnendes (MSA) Material und einen Mikrofüllstoff, der in dem MSA-Material dispergiert ist;
(d) Abscheiden des Polymer-Mikrofüllstoff-Verbundwerkstoffes;
(e) Wiederholen des Abscheideschritts, bis das dreidimensionale Objekt gebildet ist;
wobei das molekular selbstanordnende Material Wiederholungseinheiten der Formel I beinhaltet: 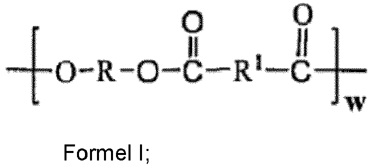 und mindestens eine zweite Wiederholungseinheit, ausgewählt aus den Ester-Amid-Einheiten der Formel II und III: 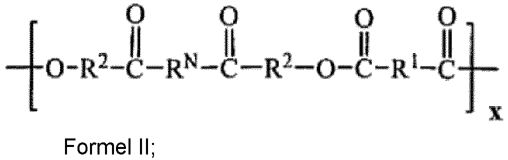 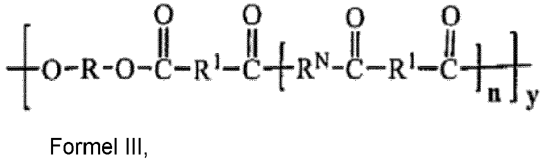 und den Ester-Urethan-Einheiten der Formel IV: 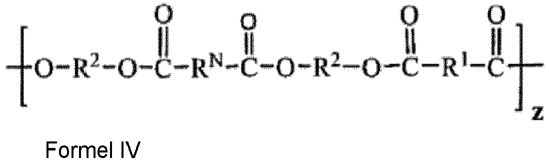 oder Kombinationen davon
wobei:
R bei jedem Auftreten unabhängig eine nicht-aromatische C₂-C₂₀-Hydrocarbylengruppe, eine nicht-aromatische C₂-C₂₀-Heterohydrocarbylengruppe oder eine Polyalkylenoxidgruppe mit einem Gruppenmolekulargewicht von etwa 100 Gramm pro Mol bis etwa 5 000 Gramm pro Mol ist;
R¹ bei jedem Auftreten unabhängig eine Bindung oder eine nicht-aromatische C₁-C₂₀-Hydrocarbylengruppe ist;
R² bei jedem Auftreten unabhängig eine nicht-aromatische C₁-C₂₀-Hydrocarbylengruppe ist;
R^{N}-N(R³)-Ra-N(R³)- ist, wobei R³ bei jedem Auftreten unabhängig H oder ein C₁-C₆-Alkylen ist und Ra eine nicht-aromatische C₂-C₂₀-Hydrocarbylengruppe ist, oder R^{N} eine C₂-C₂₀-Heterocycloalkylgruppe ist, die die zwei Stickstoffatome enthält, wobei jedes Stickstoffatom an eine Carbonylgruppe gemäß obiger Formel (III) gebunden ist;
n mindestens 1 ist und einen Mittelwert von weniger als 2 aufweist; und
w die Ester-Molfraktion der Formel I darstellt, und x, y und z jeweils die Amid- oder Urethan-Molfraktionen der Formeln II, III und IV darstellen, wobei w + x + y + z = 1 und 0 < w < 1 und mindestens eines von x, y und z größer als Null, aber weniger als 1 ist.

2. Verfahren des Herstellens eines dreidimensionalen Objekts gemäß Anspruch 1, wobei das MSA-Material selbstanordnende Einheiten beinhaltet, die mehrere Wasserstoffbindungsanordnungen beinhalten.

3. Verfahren des Herstellens eines dreidimensionalen Objekts gemäß Anspruch 2, wobei die mehreren Wasserstoffbindungsanordnungen eine Assoziationskonstante K(assoc) von reziproker Molarität größer als 1 000 aufweisen.

4. Verfahren des Herstellens eines dreidimensionalen Objekts gemäß Anspruch 2 oder 3, wobei die mehreren H-Bindungsanordnungen mindestens 4 Donor-Akzeptor-Wasserstoff-Bindungsstellen pro selbstanordnende Einheit beinhalten.

5. Verfahren des Herstellens eines dreidimensionalen Objekts gemäß einem der Ansprüche 2 bis 4, wobei die mehreren H-Bindungsanordnungen einen Durchschnitt von 2 bis 8 Donor-Akzeptor-Wasserstoff-Bindungsstellen pro selbstanordnende Einheit beinhalten.

6. Ein Verfahren des Herstellens eines dreidimensionalen Objekts, wobei das Verfahren Folgendes beinhaltet:
(a) Bereitstellen eines Polymer-Mikrofüllstoff-Verbundwerkstoffes, beinhaltend ein molekular selbstanordnendes (MSA) Material und einen Mikrofüllstoff, der in dem MSA-Material dispergiert ist;
(b) Abscheiden des Polymer-Mikrofüllstoff-Verbundwerkstoffes;
(c) Wiederholen des Abscheideschritts, bis das dreidimensionale Objekt gebildet ist;
wobei das MSA-Material nach Formel II oder III ist: 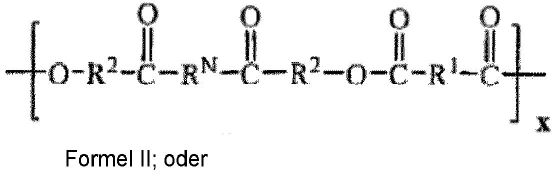 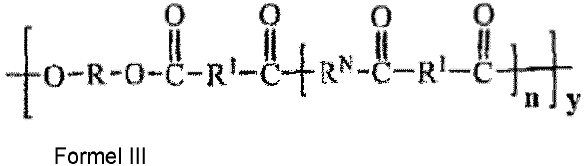 wobei:
R bei jedem Auftreten unabhängig eine nicht-aromatische C₂-C₂₀-Hydrocarbylengruppe, eine nicht-aromatische C₂-C₂₀-Heterohydrocarbylengruppe oder eine Polyalkylenoxidgruppe mit einem Gruppenmolekulargewicht von etwa 100 Gramm pro Mol bis etwa 5 000 Gramm pro Mol ist;
R¹ bei jedem Auftreten unabhängig eine Bindung oder eine nicht-aromatische C₁-C₂₀-Hydrocarbylengruppe ist;
R² bei jedem Auftreten unabhängig eine nicht-aromatische C₁-C₂₀-Hydrocarbylengruppe ist;
R^{N}-N(R³)-Ra-N(R³)- ist, wobei R³ bei jedem Auftreten unabhängig H oder ein C₁-C₆-Alkylen ist und Ra eine nicht-aromatische C₂-C₂₀-Hydrocarbylengruppe ist, oder R^{N} eine C₂-C₂₀-Heterocycloalkylgruppe ist, die die zwei Stickstoffatome enthält, wobei jedes Stickstoffatom an eine Carbonylgruppe gemäß obiger Formel (III) gebunden ist;
n mindestens 1 ist und einen Mittelwert von weniger als 2 aufweist; und
x und y eine Molfraktion darstellen, wobei x + y = 1 und 0 ≤ x ≤ 1 und 0 ≤ y ≤ 1.

7. Verfahren des Herstellens eines dreidimensionalen Objekts gemäß einem der Ansprüche 1-6, wobei das zahlendurchschnittliche Molekulargewicht (Mn) des molekular selbstanordnenden Materials zwischen etwa 1 000 Gramm pro Mol und etwa 50 000 Gramm pro Mol liegt, wobei das Mn durch NMR gemäß dem in der Spezifikation offenbarten Verfahren bestimmt wird.

8. Verfahren des Herstellens eines dreidimensionalen Objekts gemäß einem der Ansprüche 1-7, wobei der Mikrofüllstoff organische Tone, anorganische Tone, organische Stoffe, Metallhydroxid, graphitische Stoffe, Mineralien, Metalle, Keramiken oder eine Mischung davon beinhaltet.

9. Verfahren des Herstellens eines dreidimensionalen Objekts gemäß einem der Ansprüche 1-8, wobei der Polymer-Mikrofüllstoff-Verbundwerkstoff zu 20 Gew.-% oder mehr den Mikrofüllstoff beinhaltet.

## Revendications

1. Une méthode de fabrication d'un objet tridimensionnel, la méthode comprenant :
(c) la fourniture d'un composite de polymère et de microcharge comprenant un matériau d'autoassemblage moléculaire (MSA) et une microcharge dispersée dans le matériau MSA ;
(d) le dépôt du composite de polymère et de microcharge ;
(e) la répétition de l'étape de dépôt jusqu'à ce que l'objet tridimensionnel soit formé ;
dans laquelle le matériau d'autoassemblage moléculaire comprend des unités de répétition de formule I : 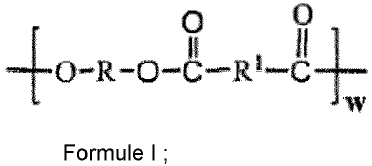 et au moins une deuxième unité de répétition sélectionnée parmi les unités ester-amide de Formule II et III : 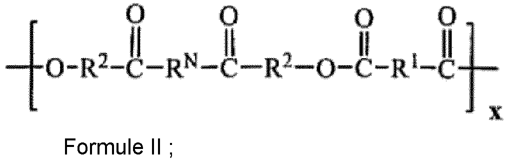 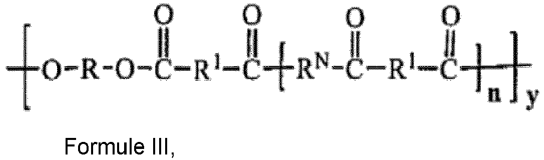 et les unités ester-uréthane de Formule IV : 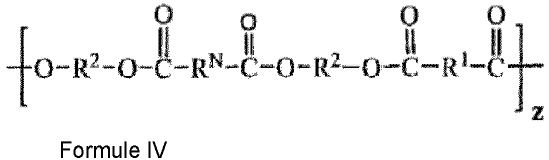 ou des combinaisons de celles-ci
dans laquelle :
R est à chaque occurrence, indépendamment, un groupe hydrocarbylène non aromatique en C₂ à C₂₀, un groupe hétérohydrocarbylène non aromatique en C₂ à C₂₀, ou un groupe oxyde de polyalkylène ayant une masse moléculaire de groupe allant d'environ 100 grammes par mole à environ 5 000 grammes par mole ;
R¹ à chaque occurrence est indépendamment une liaison ou un groupe hydrocarbylène non aromatique en C₁ à C₂₀ ;
R² à chaque occurrence est indépendamment un groupe hydrocarbylène non aromatique en C₁ à C₂₀ ;
R^{N} est -N(R³)-Ra-N(R³)-, où R³ à chaque occurrence est indépendamment H ou un alkylène en C₁ à C₆ et Ra est un groupe hydrocarbylène non aromatique en C₂ à C₂₀, ou R^{N} est un groupe hétérocycloalkyle en C₂ à C₂₀ contenant les deux atomes d'azote, dans laquelle chaque atome d'azote est lié à un groupe carbonyle selon la formule (III) ci-dessus ;
n vaut au moins 1 et a une valeur moyenne inférieure à 2 ; et
w représente la fraction molaire d'ester de Formule I, et x, y et z représentent les fractions molaires d'amide ou d'uréthane de Formules II, III, et IV, respectivement, où w + x + y + z = 1, et 0 < w < 1, et au moins un élément parmi x, y et z est supérieur à zéro mais inférieur à 1.

2. La méthode de fabrication d'un objet tridimensionnel telle que dans la revendication 1, dans laquelle le matériau MSA comprend des unités d'autoassemblage comprenant de multiples réseaux de liaisons hydrogène.

3. La méthode de fabrication d'un objet tridimensionnel telle que dans la revendication 2, dans laquelle les multiples réseaux de liaisons hydrogène ont une constante d'association K(assoc) supérieure à 1 000 de molarité réciproque.

4. La méthode de fabrication d'un objet tridimensionnel telle que dans la revendication 2 ou la revendication 3, dans laquelle les multiples réseaux de liaisons H comprennent au moins 4 sites de liaison hydrogène donneurs-accepteurs par unité d'autoassemblage.

5. La méthode de fabrication d'un objet tridimensionnel telle que dans l'une quelconque des revendications 2 à 4, dans laquelle les multiples réseaux de liaisons H comprennent une moyenne de 2 à 8 sites de liaison hydrogène donneurs-accepteurs par unité d'autoassemblage.

6. Une méthode de fabrication d'un objet tridimensionnel, la méthode comprenant :
(a) la fourniture d'un composite de polymère et de microcharge comprenant un matériau d'autoassemblage moléculaire (MSA) et une microcharge dispersée dans le matériau MSA ;
(b) le dépôt du composite de polymère et de microcharge ;
(c) la répétition de l'étape de dépôt jusqu'à ce que l'objet tridimensionnel soit formé ;
dans laquelle le matériau MSA est de Formule II ou III : 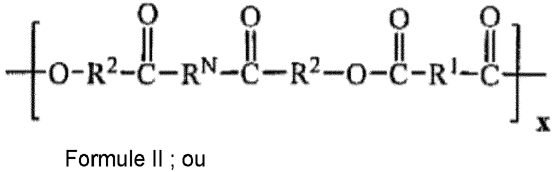 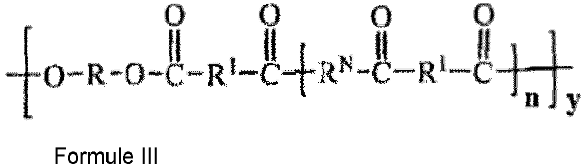 dans laquelle :
R est à chaque occurrence, indépendamment, un groupe hydrocarbylène non aromatique en C₂ à C₂₀, un groupe hétérohydrocarbylène non aromatique en C₂ à C₂₀, ou un groupe oxyde de polyalkylène ayant une masse moléculaire de groupe allant d'environ 100 grammes par mole à environ 5 000 grammes par mole ;
R¹ à chaque occurrence est indépendamment une liaison ou un groupe hydrocarbylène non aromatique en C₁ à C₂₀ ;
R² à chaque occurrence est indépendamment un groupe hydrocarbylène non aromatique en C₁ à C₂₀ ;
R^{N} est -N(R³)-Ra-N(R³)-, où R³ à chaque occurrence est indépendamment H ou un alkylène en C₁ à C₆ et Ra est un groupe hydrocarbylène non aromatique en C₂ à C₂₀, ou R^{N} est un groupe hétérocycloalkyle en C₂ à C₂₀ contenant les deux atomes d'azote, dans laquelle chaque atome d'azote est lié à un groupe carbonyle selon la formule (III) ci-dessus ;
n vaut au moins 1 et a une valeur moyenne inférieure à 2 ; et
x et y représentent une fraction molaire dans laquelle x + y = 1, et 0 ≤ x ≤ 1, et 0 ≤ y ≤ 1.

7. La méthode de fabrication d'un objet tridimensionnel telle que dans l'une quelconque des revendications 1 à 6, dans laquelle la masse moléculaire moyenne en nombre (Mn) du matériau d'autoassemblage moléculaire est comprise entre environ 1 000 grammes par mole et environ 50 000 grammes par mole, dans laquelle la Mn est déterminée par RMN selon la méthode divulguée dans la description.

8. La méthode de fabrication d'un objet tridimensionnel telle que dans l'une quelconque des revendications 1 à 7, dans laquelle la microcharge comprend des argiles organiques, des argiles inorganiques, des matières organiques, un hydroxyde métallique, des matières graphitiques, des minéraux, des métaux, des céramiques ou un mélange de ceux-ci.

9. La méthode de fabrication d'un objet tridimensionnel telle que dans l'une quelconque des revendications 1 à 8, dans laquelle le composite de polymère et de microcharge comprend 20 % en poids ou plus de la microcharge.
